# EUROPÄISCHE PATENTSCHRIFT

(11) **EP 2 846 663 B1**
(45) Veröffentlichungstag und Bekanntmachung des Hinweises auf die Patenterteilung: **04.04.2018**
(21) Anmeldenummer: 13715712.9
(22) Anmeldetag: 15.04.2013
(51) Int. Cl.: F25D 23/02, F25D 23/08, A47F 3/04, F25D 11/00

(54) **KÜHLGERÄT**
COOLING APPLIANCE
APPAREIL FRIGORIFIQUE

(30) Priorität: 09.05.2012 DE 202012101699 U
(43) Veröffentlichungstag der Anmeldung: 18.03.2015
(73) Patentinhaber: AHT Cooling Systems GmbH, 8786 Rottenmann (AT)
(72) Erfinder: RESCH, Reinhold, A-8755 St. Peter (AT)
(74) Vertreter: Fleck, Hermann-Josef
(86) Internationale Anmeldenummer: PCT/EP2013/057826
(87) Internationale Veröffentlichungsnummer: WO 2013/167352

(56) Entgegenhaltungen:
- WO-A1-2011/116853

## Beschreibung

Die Erfindung bezieht sich auf ein Kühlgerät mit mindestens einem in einem Gehäuse befindlichen Kühlraum, der von oben über mindestens einen seitlich verschiebbaren Schiebedeckel zugänglich ist, der eine durchsichtige, insbesondere mit einer wärmereflektierenden Innenbeschichtung versehene Scheibe aufweist, welche zumindest in ihrem vorderen Längsbereich über eine quer zur Längsrichtung nach außen konvexe Krümmung in einen mit einer vorderseitigen Einfassung versehenen Längsrand ausläuft, wobei die vorderseitige Einfassung einen bezüglich der vertikalen Schwerkraftrichtung mit einem Dichtmittel versehene horizontale Lagerfläche aufweist.

Ein Kühlgerät dieser Art ist in der WO 2011/116853 A1 angegeben. Bei diesem bekannten Kühlgerät ist in einem Gehäuse ein Kühlraum gebildet, der oben von einem verschiebbaren Schiebedeckel abgeschlossen ist. Der Schiebedeckel läuft bei einem Ausführungsbeispiel schräg zu einem Längsrand hin aus und ist entlang dem Längsrand mit einer Einfassung versehen, die eine horizontale Lagerfläche mit einem darin eingesetzten Dichtmittel aufweist. Die Verschlussanordnung mit dem Verschlusselement in Form des Schiebedeckels ist insbesondere in oder an wenigstens einem Führungselement geführt, wobei wenigstens ein freies Ende des Verschlusselements und des Führungselements über eine magnetische Anziehungskraft miteinander in Wirkverbindung stehen.

Ein weiteres Kühlgerät ist in der US D541 827 S gezeigt. Hierbei ist ein Gehäuse, das einen im Wesentlichen quaderförmigen Kühlraum für Waren umgibt, auf seiner Oberseite mit längs verschieblichen Schiebedeckeln versehen, die entlang ihrer in Längsrichtung des Gehäuses verlaufenden seitlichen Ränder gleitend geführt sind, um den Kühlraum auf seiner Oberseite zur Entnahme oder zum Einlegen von Waren zu öffnen und danach wieder gut abgedichtet zu verschließen. Allerdings sind die Führungen einer nicht unerheblichen Beanspruchung ausgesetzt, können mit der Zeit verschmutzen und unterliegen daher einem Verschleiß, der der Leichtgängigkeit der Schiebedeckel und ihrer Abdichtfunktion auf Dauer abträglich ist.

Ein truhenartiges Kühlgerät ist auch in der US D586,366 S gezeigt.

Der vorliegenden Erfindung liegt die Aufgabe zugrunde, ein Kühlgerät der eingangs genannten Art bereit zu stellen, bei dem eine leichtgängige Verschiebung und zuverlässige Abdichteigenschaften dauerhaft erhalten bleiben.

Diese Aufgabe wird mit den Merkmalen des Anspruches 1 gelöst. Hierbei ist vorgesehen, dass die vorderseitige Einfassung eine bezüglich der vertikalen Schwerkraftrichtung horizontale Lagerfläche aufweist.

Mittels der horizontalen Lagerfläche der vorderseitigen Einfassung ergibt sich eine flache horizontale Gleitfläche bzw. Gleitbahn mit flächiger Abstützung des unteren Längsrandes des oder der im Querschnitt konvex gekrümmten Schiebedeckel gegen die Gewichtskraft mit vorteilhaften Laufeigenschaften und breitflächiger Abdichtung. Die horizontale Gleitfläche ist zudem wenig schmutzanfällig, da enge Hohlräume vermieden sind, und kann leicht gereinigt werden. Die Ausbildung des Schiebedeckels mit der dichten Einfassung trägt auf Dauer auch zu einem energiesparenden Betrieb bei, wobei die Energieeffizienz noch verbessert wird, wenn die Scheibe auf ihrer Innenseite zusätzlich noch mit einer wärmereflektierenden Innenbeschichtung versehen ist.

Für die Abdichtung und gute Laufeigenschaften sind dabei die Maßnahmen von Vorteil, dass die horizontale Lagerfläche mit einem Dichtmittel versehen ist.

Zu einer leichtgängigen Bewegung bei guter Führung tragen die Maßnahmen bei, dass ein vorderer, im Querschnitt vertikaler Rand der Einfassung als Stützabschnitt für eine Längsführung dient und mit über seine Vorderebene vortretenden Abstandselementen versehen ist.

Eine für den Aufbau und die Funktion vorteilhafte Ausgestaltung besteht darin, dass die Einfassung als Längsprofil mit einem Verbindungsabschnitt, der einen an den vorderen Längsrand anschließenden inneren und äußeren Flächenbereich der Scheibe übergreift, und mit einem daran angeformten abgewinkelten Lagerabschnitt ausgebildet ist, der mit der horizontalen Lagerfläche versehen ist. Die Einfassung kann vorteilhaft aus Kunststoff hergestellt werden.

Eine gute Funktion wird ferner dadurch unterstützt, dass das Dichtmittel auf seiner Unterseite Gleiteigenschaft aufweist und als separates Dichtungselement ausgebildet ist, das auf der horizontalen Lagerfläche angebracht ist.

Für den Aufbau und die Funktion sind des Weiteren die Maßnahmen von Vorteil, dass der Lagerabschnitt mit einer längs verlaufenden Aufnahmekammer versehen ist, die auf ihrer Unterseite von einer die Lagerfläche aufweisenden Abschlusswand begrenzt ist und in die das Dichtungselement mit einem Halteabschnitt eingesetzt ist. Beispielsweise kann bei diesem Aufbau ein beschädigtes Dichtungselement leicht ersetzt werden.

Ist vorgesehen, dass die Abstandselemente nach außen gewölbte Stützflächen aufweisen, ergibt sich durch eine punktuelle Abstützung mittels der Abstandselemente an einem vorderseitigen Führungsabschnitt eine leichtgängige Führung mit minimaler Querkraft.

Zu einer leichtgängigen Verschiebung und guten Abdichtung tragen ferner die Maßnahmen bei, dass die Scheibe an ihrem hinteren Längsrand mit einer rückseitigen Einfassung versehen ist, die einen Lagerabschnitt mit einer horizontalen Lagerfläche auf dessen Unterseite aufweist.

Die guten Lauf- und Abdichteigenschaften bei energieeffizientem Betrieb kommen beispielsweise bei einer Ausbildung vorteilhaft zum Tragen, bei der vorgesehen ist, dass die Scheibe über die konvexe Krümmung vom vorderseitigen Längsrand ansteigt und in einen nach hinten anschließenden flachen horizontalen Bereich übergeht, dessen hinterer Längsrand mit der die horizontale Lagerfläche aufweisenden rückseitigen Einfassung versehen ist, wobei ein Dichtmittel entsprechend der Lagerfläche der vorderseitigen Einfassung aufgebracht ist.

Eine vorteilhafte Ausführung wird z. B. dadurch erreicht, dass das Gehäuse an seinem oberen Randbereich mit einem Abdeckrahmen versehen ist, der mindestens eine längs verlaufende, auf die Lagerfläche in Position und Ausdehnung abgestimmte Auflagefläche und einen an den Stützabschnitt in Position und Lage abgestimmten Führungsabschnitt aufweist.

Die Erfindung wird nachfolgend anhand von Ausführungsbeispielen unter Bezugnahme auf die Zeichnungen näher erläutert. Es zeigen:
- Fig. 1: ein Kühlgerät mit Schiebedeckeln in perspektivischer Ansicht von seitlich vorn,
- Fig. 2: einen vergrößerten Ausschnitt des Kühlgeräts in einem vorderen Führungsbereich der Schiebedeckel im Querschnitt und
- Fig. 3: einen vergrößerten Ausschnitt im hinteren Führungsbereich eines Schiebedeckels im Querschnitt.

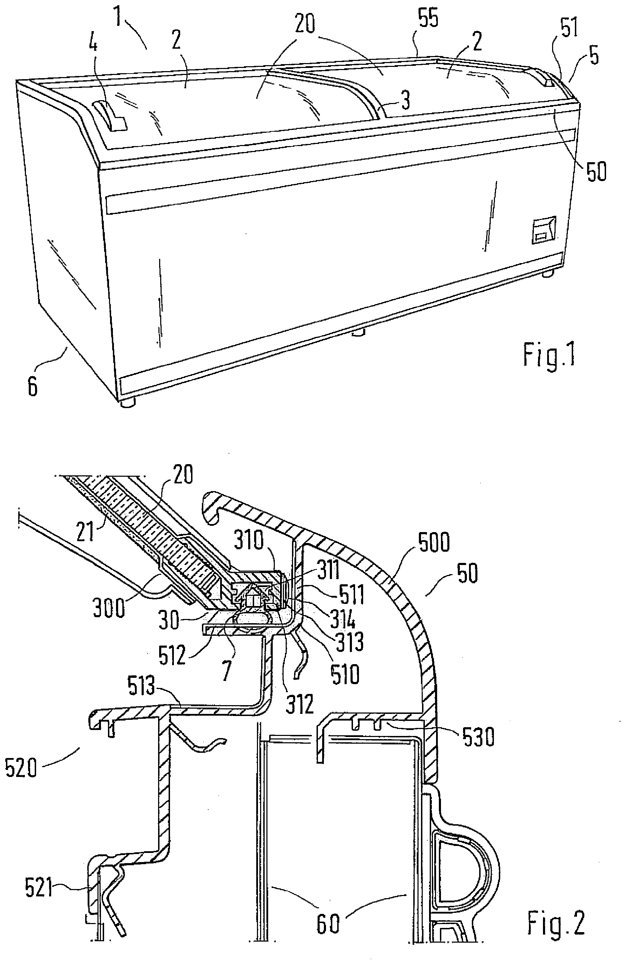

Fig. 1 zeigt ein truhenartiges Kühlgerät 1 mit einem im Wesentlichen quaderförmigen Gehäuse 6, das mit einer Vorderwand, zwei Seitenwänden, einer (in der Darstellung nicht sichtbaren) Rückwand, einem (ebenfalls nicht sichtbaren) Boden und einer öffenbaren Abdeckung auf der Oberseite einen Kühlraum für Waren umschließt. Die Abdeckung des Gehäuses 6 ist dabei von zwei in Längsrichtung des Gehäuses verschiebbaren Schiebedeckeln 2 gebildet, die aus einer transparenten Scheibe 20, vorzugsweise aus Glas, oder alternativ aus einem Kunststoffmaterial wie Plexiglas, und einer an dieser randseitig angebrachten Deckeleinfassung 3 bestehen. Zum einfachen Verschieben sind auf den beiden Scheiben 20 der Schiebedeckel 2 Griffe 4 angebracht. Der obere Rand des Gehäuses 6 ist mit einem Abdeckrahmen 5 versehen, der einen vorderseitigen Rahmenteil 50, zwei seitliche Rahmenteile 51 sowie einen rückseitigen Rahmenteil 55 umfasst und auf seiner Unterseite mit Aufnahmestrukturen versehen ist, in die die oberen Bereiche der Wandelemente des Gehäuses 6 eingesetzt sind.

Wie aus Fig. 2 ersichtlich, ist die Innenseite der Scheiben 20 mit einer wärmereflektierenden Innenbeschichtung 21 versehen, so dass von außen auf die Scheiben 20 auftreffende Wärmestrahlung zumindest zum Teil reflektiert und evtl., je nach Ausbildung und Anforderung, auch teilweise absorbiert wird und von einem Eindringen in den Kühlraum zumindest weitgehend abgehalten wird. Im sichtbaren Spektralbereich sind die Scheiben 20 transparent bzw. durchsichtig, so dass die Waren im Kühlraum bei geschlossener Abdeckung von außen gut sichtbar sind.

Zur guten Sichtbarkeit und zudem zu einer guten Zugänglichkeit des Kühlraumes von der dem Benutzer zugekehrten Vorderseite aus trägt bei, dass der obere Rand der Vorderwand des Gehäuses 6 gegenüber dem oberen Rand der Seitenwände und der Rückwand nach unten abgesetzt ist und die Scheiben 20 von der Rückseite aus zunächst über einen flachen horizontalen Abschnitt und eine anschließende konvexe Krümmung nach außen und unten bis zu dem den oberen Rand der Vorderwand abdeckenden vorderseitigen Rahmenteil 50 verlaufen, wobei die Außen- und Innenflächen der Scheiben 20 im Bereich des Vorderrands schräg nach vorn unten gerichtet sind. Der Winkel der vorderen Bereiche der Außen- bzw. Innenflächen bzw. ihrer Tangenten gegenüber der Vertikalen (Schwerkraftrichtung) beträgt dabei deutlich mehr als 0° und deutlich weniger als 90° und liegt beispielsweise in einem Bereich zwischen 10° und 85° gegenüber der Vertikalen, wie aus Fig. 2 ersichtlich ist.

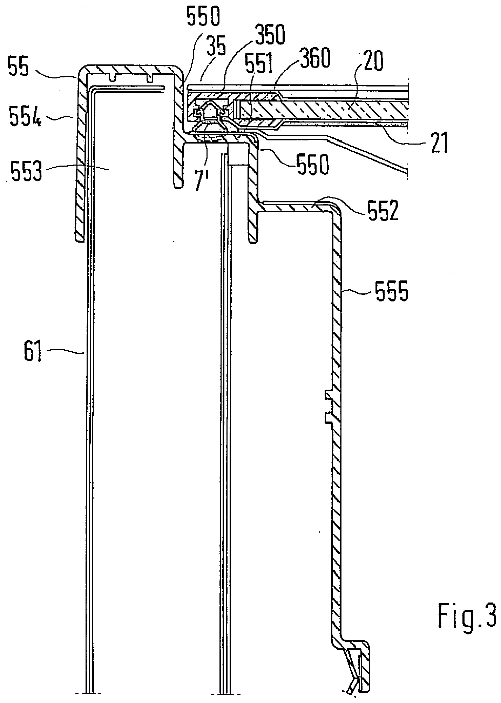

Die Deckeleinfassung 3 der Scheiben 20 umfasst zwei seitliche Einfassungen, eine vorderseitige Einfassung 30 und eine rückseitige Einfassung 35, wobei Fig. 2 die vorderseitige Einfassung 30 und Fig. 3 die rückseitige Einfassung 35 im Querschnitt zeigen.

Wie Fig. 2 zeigt, übergreift die vorderseitige Einfassung 30 mit einem Verbindungsabschnitt 300 den randseitigen Abschnitt der Außenfläche und Innenfläche der Scheibe 20 und ist an dem randseitigen Abschnitt der betreffenden Scheibe 20 befestigt. An den Verbindungsabschnitt 300 schließt sich nach vorne ein einstückig angeformter Lagerabschnitt 310 an, der gegenüber dem vorderen Abschnitt der Scheibe 20 abgewinkelt ist und horizontal nach vorne vorsteht und auf seiner Unterseite eine horizontale Lagerfläche 312 bildet. Auf der Vorderseite des Lagerabschnitts 310 ist ein vertikaler, also im Querschnitt rechtwinklig zu der Lagerfläche 312 ausgerichteter, Stützabschnitt 313 gebildet, auf dessen Vorderseite Abstandselemente 314 angebracht sind. In dem Lagerabschnitt 310 ist eine in Längsrichtung verlaufende Aufnahmekammer 311 eingeformt, deren untere Wandung über einen mittigen Längsspalt zur Lagerfläche 312 hin geöffnet ist, so dass sich ein hinterschnittener, T-nutartiger Aufnahmeabschnitt ergibt.

In die Aufnahmekammer 311 ist von unten ein Dichtungselement 7 mit einem Halteabschnitt eingesetzt, der auf der Innenseite der unteren Abschlusswand mittels seitlich vorstehender Haltelippen gehalten ist. Das über die Länge der vorderseitigen Einfassung 30 verlaufende Dichtungselement 7 erstreckt sich beidseitig nach außen über den Öffnungsspalt und bildet eine dichtende Gleitfläche zwischen der Lagerfläche 312 und einem zugekehrten flächigen horizontalen Auflageabschnitt 512, der an dem Abdeckrahmen 5 ausgebildet ist, so dass sich eine Gleitauflage für den Schiebedeckel 2 entlang dem vorderseitigen Rahmenteil 50 mit flächiger Gleitbahn und flächiger Abdichtung ergibt. Bei dem gezeigten Ausführungsbeispiel ist das Dichtungselement 7 in seinem unteren Abschnitt hohl und im Querschnitt nach unten konvex gewölbt, wodurch sich infolge der Gewichtskraft ein dichtender flächiger Andruck auf dem Auflageabschnitt 512 mit guter Abdichtung und Laufeigenschaften ergibt.

Dem Stützabschnitt 313 mit den vorderseitigen Abstandselementen 314 steht die Innenfläche eines vertikalen vorderseitigen Führungsabschnitts 511 gegenüber, der an dem vorderseitigen Rahmenteil 50 angeformt ist. Erfindungsgemäß sind die Abstandselemente 314 nach außen konvex in der Weise geformt, dass sich eine punktförmige Abstützung ergibt, wobei in Längsrichtung des Stützabschnitts 313 z. B. zwei oder auch mehr Abstandselemente 314, wie z. B. Nieten, angebracht sind.

Die Abstandselemente 314 lassen sich exakt zwischen dem vertikalen Stützabschnitt 313 und dem Führungsabschnitt 511 einmessen, um Verkantungen beim Öffnen und Schließen des Schiebedeckels 2 gegenüber dem Abdeckrahmen 5 zu verhindern. Mit diesen Maßnahmen ergibt sich entlang der vertikalen vorderen Abstützung eine minimale Querkraft bei guten Gleiteigenschaften in der so gebildeten Führung. Dabei ist eine zuverlässige Abdichtung bei leichtgängigem Lauf des Schiebedeckels 2 bewirkt, insbesondere, wenn das Dichtungselement 7 seinerseits bezüglich des Auflageabschnitts 512 gute Gleiteigenschaften besitzt.

Wie die Fig. 2 weiter zeigt, ist der vorderseitige Rahmenteil 50 mit einem nach außen vorn und oben im Querschnitt gewölbten Frontabschnitt 500 versehen, der nach hinten in einen oberseitigen, von dem Auflageabschnitt 512 und dem auf diesem aufliegenden Lagerabschnitt 310 beabstandeten und diesen überragenden Endabschnitt übergeht, so dass der Schiebedeckel 2 gegen ein unbeabsichtigtes Abheben nach oben gesichert ist.

Unterhalb des oberen Auflageabschnitts 512 ist der vorderseitige Rahmenteil 50 mit einem eingeformten unteren horizontalen Auflageabschnitt 513 versehen, der nach vorn über einen vorderseitigen unteren vertikalen Führungsabschnitt begrenzt und an der Unterseite des oberen Auflageabschnitts 512 angeformt ist. Der untere Auflageabschnitt 513 besitzt eine zu einer Auflagefläche 510 des oberen Auflageabschnitts 512 parallele horizontale Auflagefläche, auf die der zweite Schiebedeckel mit seiner vorderseitigen Einfassung entsprechend der vorderseitigen Einfassung 30 mit einer horizontalen Lagerfläche und einem zwischengefügten Dichtungselement aufgelegt werden kann, so dass die beiden Schiebedeckel 2 seitlich in Überdeckung relativ zueinander verschiebbar sind. An den unteren Auflageabschnitt 513 schließt sich nach hinten ein leicht schräg nach unten gerichteter Abschnitt an, über den der Lagerabschnitt der vorderseitigen Einfassung des zweiten Schiebedeckels leicht einsetzbar und zusätzlich nach unten gesichert ist. Sowohl der obere Auflageabschnitt 512 als auch der untere Auflageabschnitt 513 sind nach hinten offen, das heißt von keinem nach oben vortretenden Vorsprung begrenzt und können somit gut sauber gehalten und ungehindert gereinigt werden.

Die vorderseitige Einfassung 30 sowie auch der vorderseitige Rahmenteil 50 sind vorteilhaft als Längsprofile ausgebildet, wobei auf deren Unterseite des Rahmenteils 50 ein vorderer Aufnahmeabschnitt 530 und ein Halteabschnitt 521 zum Einsetzen von Abschnitten der vorderen Gehäusewandung ausgebildet sind und auf der Rückseite eine hintere Aufnahme 520 unterhalb des über den unteren Auflageabschnitt 513 nach hinten vorstehenden Abschnitts gebildet ist. Die vorderseitige Einfassung 30 und der vorderseitige Rahmenteil 50, wie auch die übrigen Abschnitte der Deckeleinfassung 3 und des Abdeckrahmens 5 sind vorzugsweise aus Kunststoff ausgebildet, können alternativ aber auch aus einem anderen Material, wie Metall, bestehen, wobei die übrigen Rahmenteile und Abschnitte der Deckeleinfassung 3 ebenfalls vorteilhaft als Profilabschnitte ausgebildet sind.

Wie Fig. 3 zeigt, ist auch der rückseitige Randbereich der Scheiben 20 mit einer rückseitigen Einfassung 35 versehen, wobei entsprechend dem vorderen Randbereich die angrenzenden Außen- und Innenflächen der Scheiben 20 von einem Verbindungsabschnitt 360 übergriffen sind, an den rückseitig einstückig ein horizontal gerichteter Lagerabschnitt 350 mit einer horizontalen Lagerfläche auf dessen Unterseite angeformt ist. Der Lagerabschnitt 350 weist ebenfalls eine in Längsrichtung verlaufende Aufnahmekammer mit einem in Längsrichtung verlaufenden Öffnungsspalt in seinem unteren Randabschnitt auf, in den ein Dichtungselement 7' mit einem Halteabschnitt eingesetzt ist, wie im Zusammenhang mit der vorderseitigen Einfassung 30 vorstehend beschrieben und in Fig. 2 gezeigt. Das Dichtungselement 7' ist in seinem unteren Abschnitt hohl und nach unten im Querschnitt konvex gewölbt für eine dichtende Auflage bei der wirkenden Gewichtskraft und für gute Laufeigenschaften.

Ist auch der hintere Abschnitt des Schiebedeckels 2 mit der oder den Scheiben 20 entsprechend dem vorderen Abschnitt konvex gewölbt, kann die Ausbildung entsprechend dem vorderseitigen Abschnitt ausgeführt sein.

Wie Fig. 3 zeigt, ist der rückseitige Rahmenteil 55 des Abdeckrahmens 5 ebenfalls mit einem rückseitigen Führungsabschnitt versehen, der einen oberen Auflageabschnitt 551 und einen gegenüber diesem nach unten abgesetzten unteren Auflageabschnitt 552 mit jeweiligen horizontalen Auflageflächen aufweist. Der obere Auflageabschnitt 551 ist dabei mit einem vertikalen rückseitigen Führungsabschnitt nach hinten, oben begrenzt, während der untere Auflageabschnitt 552 von einem vertikalen, nach oben zeigenden hinteren Führungsabschnitt begrenzt ist, der sich an die Vorderseite des oberen Auflageabschnitts 551 anschließt. Nach vorne gehen der obere Auflageabschnitt 551 und der untere Auflageabschnitt 552 ebenfalls ohne nach oben vorstehenden Vorsprung zum Kühlraum über und können leicht sauber gehalten werden.

Ferner weist der rückseitige Rahmenteil 55 auf seiner Unterseite eine rückseitige Aufnahmeabschnitt 553 auf, die von einem vertikalen außenseitigen Begrenzungsabschnitt 554 auf der Rückseite und von einem vertikalen innenseitigen Begrenzungsabschnitt 555 auf der Innenseite begrenzt ist, so dass obere Abschnitte der Rückwand des Gehäuses 6 in den rückseitigen Aufnahmeabschnitt 553 einfach eingesetzt werden können und stabil aufgenommen sind.

Auch aus Fig. 3 ist die Innenbeschichtung 21 der Scheiben 20 ersichtlich. Durch die Führung mit den horizontalen Aufnahmeabschnitten 552, 553 im Zusammenwirken mit der horizontalen Lagerfläche des rückwärtigen Lagerabschnitts 350 wird die leicht gängige, gut abgedichtete Führung der Schiebedeckel 2 ergänzt.

## Patentansprüche

1. Kühlgerät (1) mit mindestens einem in einem Gehäuse (6) befindlichen Kühlraum, der von oben über mindestens einen seitlich verschiebbaren Schiebedeckel (2) zugänglich ist, der eine durchsichtige, insbesondere mit einer wärmereflektierenden Innenbeschichtung (21) versehene Scheibe (20) aufweist, welche zumindest in ihrem vorderen Längsbereich über eine quer zur Längsrichtung nach außen konvexe Krümmung in einen mit einer vorderseitigen Einfassung (30) versehenen Längsrand ausläuft, wobei die vorderseitige Einfassung (30) eine bezüglich der vertikalen Schwerkraftrichtung mit einem Dichtmittel versehene horizontale Lagerfläche (312) aufweist,
**dadurch gekennzeichnet,**
**dass** ein vorderer, im Querschnitt vertikaler Rand der Einfassung (30) als Stützabschnitt (313) für eine Längsführung dient und mit mehreren über seine Vorderebene vortretenden Abstandselementen (314) versehen ist, die nach außen gewölbte Stützflächen aufweisen und die nach außen konvex in der Weise geformt sind, dass sich eine punktförmige Abstützung ergibt.

2. Kühlgerät nach Anspruch 1,
**dadurch gekennzeichnet,**
**dass** die Einfassung als Längsprofil mit einem Verbindungsabschnitt (300), der einen an den vorderen Längsrand anschließenden inneren und äußeren Flächenbereich der Scheibe übergreift, und mit einem daran angeformten abgewinkelten Lagerabschnitt (310) ausgebildet ist, der mit der horizontalen Lagerfläche (312) versehen ist.

3. Kühlgerät nach einem der der vorhergehenden Ansprüche,
**dadurch gekennzeichnet,**
**dass** das Dichtmittel auf seiner Unterseite Gleiteigenschaft aufweist und als separates Dichtungselement (7) ausgebildet ist, das auf der horizontalen Lagerfläche (312) angebracht ist.

4. Kühlgerät nach Anspruch 3,
**dadurch gekennzeichnet,**
**dass** der Lagerabschnitt (310) mit einer längs verlaufenden Aufnahmekammer (311) versehen ist, die auf ihrer Unterseite von einer die Lagerfläche (312) aufweisenden Abschlusswand begrenzt ist und in die das Dichtungselement (7) mit einem Halteabschnitt eingesetzt ist.

5. Kühlgerät nach einem der vorhergehenden Ansprüche,
**dadurch gekennzeichnet,**
**dass** die Scheibe (20) an ihrem hinteren Längsrand mit einer rückseitigen Einfassung (35) versehen ist, die einen Lagerabschnitt (350) mit einer horizontalen Lagerfläche auf dessen Unterseite aufweist.

6. Kühlgerät nach Anspruch 5,
**dadurch gekennzeichnet,**
**dass** die Scheibe (20) über die konvexe Krümmung vom vorderseitigen Längsrand ansteigt und in einen nach hinten anschließenden flachen horizontalen Bereich übergeht, dessen hinterer Längsrand mit der die horizontale Lagerfläche aufweisenden rückseitigen Einfassung (35) versehen ist, wobei ein Dichtmittel entsprechend der Lagerfläche (312) der vorderseitigen Einfassung (30) aufgebracht ist.

7. Kühlgerät nach einem der vorhergehenden Ansprüche,
**dadurch gekennzeichnet,**
**dass** das Gehäuse (6) an seinem oberen Randbereich mit einem Abdeckrahmen (5) versehen ist, der mindestens eine längs verlaufende, auf die Lagerfläche (312) in Position und Ausdehnung abgestimmte Auflagefläche (510) und einen an den Stützabschnitt (313) in Position und Lage abgestimmten Führungsabschnitt (511) aufweist.

8. Kühlgerät nach Anspruch 7,
**dadurch gekennzeichnet,**
**dass** der Abdeckrahmen (5) einen vorderseitigen Rahmenteil (50), zwei seitliche Rahmenteile (51) und einen rückseitigen Rahmenteil (55) umfasst,
**dass** der vorderseitige Rahmenteil (50) einen oberen horizontalen Auflageabschnitt (512) und einen den Abstandselementen (314) gegenüberstehenden vertikalen vorderseitigen Führungsabschnitt (511) sowie einen unteren horizontalen Auflageabschnitt (513) aufweist, der nach vorn über einen an der Unterseite des oberen Auflageabschnitts (512) angeformten vorderseitigen unteren vertikalen Führungsabschnitt begrenzt ist,
**dass** sich an den unteren Auflageabschnitt (513) nach hinten ein leicht schräg nach unten gerichteter Abschnitt anschließt und
**dass** der rückseitige Rahmenteil (55) mit einem Führungsabschnitt versehen ist, der einen oberen Auflageabschnitt (551) und einen gegenüber diesem nach unten abgesetzten unteren Auflageschnitt (552) mit jeweiligen horizontalen Auflageflächen aufweist, wobei der obere Auflageabschnitt (551) mit einem vertikalen rückseitigen Führungsabschnitt nach hinten oben und der untere Auflageabschnitt (552) von einem vertikalen, nach oben zeigenden hinteren Führungsabschnitt begrenzt ist, der sich an die Vorderseite des oberen Auflageabschnitts (551) anschließt.

## Claims

1. A cooling appliance (1) with at least one cooling chamber contained within a housing (6), accessible from above by means of at least one laterally displaceable sliding lid (2), having a transparent pane (20), in particular, provided with a heat reflecting inner coating (21), which, at least in its longitudinal front section, terminates in a longitudinal edge provided with a front rim (30) via an outwardly convex curvature transverse to the longitudinal direction, wherein the front rim (30) has a horizontal bearing surface (312) provided with a sealing means relative to the vertical gravitational direction,
**characterized**
**in that** a front, in its cross-section vertical, edge of the rim (30) functions as a support section (313) for a longitudinal guide and is provided with a plurality of spacer elements (314) protruding from its front level, having outwardly curved support surfaces and being shaped in such an outwardly convex fashion that they provide punctiform support.

2. The cooling appliance according to claim 1,
**characterized**
**in that** the rim is designed as a longitudinal profile with a connection section (300) which engages over an inner and outer surface section of the pane adjoining to the front longitudinal edge, and is formed with a molded angulated bearing section (310) thereupon, which is provided with the horizontal bearing surface (312).

3. The cooling appliance according to any of the preceding claims,
**characterized**
**in that** the sealing means has a sliding property on its underside and is formed as a separate sealing element (7), which is attached to the horizontal bearing surface (312).

4. The cooling appliance according to claim 3,
**characterized**
**in that** the bearing section (310) is provided with a longitudinally running receiving chamber (311) which is limited on its underside by an end wall having the bearing surface (312), and which is integrated into the sealing element (7) by means of a holding section.

5. The cooling appliance according to any of the preceding claims,
**characterized**
**in that** the pane (20) is provided with a rear rim (35) on its rear longitudinal edge, having a bearing section (350) with a horizontal bearing surface on its underside.

6. The cooling appliance according to claim 5,
**characterized**
**in that** the pane (20) rises above the convex curvature of the front longitudinal edge and changes to a rear adjoining flat horizontal section, the rear longitudinal edge of which is provided with the rear rim (35) having the horizontal bearing surface, wherein a sealing means corresponding to the bearing surface (312) of the front rim (30) is applied.

7. The cooling appliance according to any of the preceding claims,
**characterized**
**in that** the upper edge section of the housing (6) is provided with a cover frame (5), having at least a longitudinally running contact surface (510) adjusted to the position and dimension of the bearing surface (312), and a guide section (511) adjusted to the position and dimension of the support section (313).

8. The cooling appliance according to claim 7,
**characterized**
**in that** the cover frame (5) comprises a front frame component (50), two side frame components (51), and a rear frame component (55),
**in that** the front frame component (50) has an upper horizontal contact section (512) and a vertical front guide section (511) facing the spacer elements (314), as well as a lower horizontal contact section (513), which is limited to the front by means of a front lower vertical guide section formed on the underside of the upper contact section (512),
**in that** a slightly obliquely downward facing section adjoins to the lower contact section (513) on the rear, and
**in that** the rear frame component (55) is provided with a guide section, having an upper contact section (551) and a lowered lower contact section (552) with respective horizontal contact surfaces, wherein the upper contact section (551) is limited upward at the rear by means of a vertical rear guide section, and the lower contact section (552) by a vertical upward facing rear guide section adjoining to the front side of the upper contact section (551).

## Revendications

1. Appareil de réfrigération (1) comportant au moins une chambre de réfrigération se trouvant dans un boîtier (6), qui est accessible par le haut via au moins un couvercle coulissant (2) coulissant latéralement, qui comporte une vitre (20) transparente, en particulier dotée d'un revêtement interne (21) réfléchissant la chaleur, laquelle se prolonge au moins dans sa zone longitudinale avant par l'intermédiaire d'une courbure convexe extérieure transversale à la direction longitudinale, dans un bord longitudinal doté d'un cadre (30) avant, le cadre (30) avant comportant une surface de stockage (312) horizontale pourvue d'un élément d'étanchéité par rapport à la direction verticale de la gravité,
**caractérisé en ce qu'**
un bord avant, vertical en section transversale, du cadre (30) sert de section d'appui (313) pour un guidage longitudinal et est pourvu de plusieurs éléments d'écartement (314) saillants par-dessus sa façade, qui comportent des surfaces d'appui courbées vers l'extérieur et qui sont formés de manière convexe vers l'extérieur, de sorte qu'il en résulte un étaiement en forme de points.

2. Appareil de réfrigération selon la revendication 1,
**caractérisé en ce que**
le cadre déborde, en profil longitudinal avec une section de liaison (300), avec une surface interne et externe de la vitre se rattachant au bord longitudinal avant, et est formé avec une section de stockage (310) formée en coude à cet effet, qui est pourvue de la surface de stockage horizontale (312).

3. Appareil de réfrigération selon une des revendications précédentes,
**caractérisé en ce que**,
le moyen d'étanchéité possède une propriété glissante sur sa face inférieure et est formé en tant qu'élément d'étanchéité (7) indépendant, qui est fixé sur la surface de stockage horizontale (312).

4. Appareil de réfrigération selon la revendication 3,
**caractérisé en ce que**,
la section de stockage (310) est pourvue d'un compartiment (311) s'étendant longitudinalement, qui est délimitée sur sa face inférieure par une paroi de fermeture présentant la surface de stockage (312) et dans laquelle l'élément d'étanchéité (7) est inséré avec une section de maintien.

5. Appareil de réfrigération selon une des revendications précédentes,
**caractérisé en ce que**,
la vitre (20) est pourvue d'un cadre (35) arrière sur son bord longitudinal arrière, qui présente une section de stockage (350) comportant une surface de stockage horizontale sur sa face inférieure.

6. Appareil de réfrigération selon la revendication 5,
**caractérisé en ce que**,
la vitre (20) monte depuis le bord longitudinal avant par-dessus la courbure convexe et passe dans une zone horizontale plate se rattachant vers l'arrière, dont le bord longitudinal arrière est pourvu du cadre (35) arrière présentant la surface de stockage horizontale, un moyen d'étanchéité étant fixé en correspondance à la surface de stockage (312) du cadre avant (30).

7. Appareil de réfrigération selon une des revendications précédentes,
**caractérisé en ce que**
le boîtier (6) est pourvu d'un cadre de recouvrement (5) sur son bord supérieur, qui comporte au moins une surface de support (510) s'étendant longitudinalement, concordant dans sa position et son étendue avec la surface de stockage (312) ainsi qu'une section de guidage (511) concordant dans sa position et emplacement avec la section d'appui (313).

8. Appareil de réfrigération selon la revendication 7,
**caractérisé en ce que**
le cadre de recouvrement (5) comprend une pièce de cadre avant (50), deux pièces de cadre latérales (51) et une pièce de cadre arrière (55),
la pièce de cadre avant (50) comporte une section de support horizontale supérieure (512) et une section de guidage avant verticale (511) opposée aux éléments d'écartement (314), ainsi qu'une section de support horizontale inférieure (513), qui est délimitée vers l'avant via une section de guidage verticale inférieure avant formée sur la face inférieure de la section de support supérieure (512),
une section légèrement orientée de biais vers le bas se joint vers l'arrière sur la section de support horizontale inférieure (513),
la pièce de cadre arrière (55) est pourvue d'une section de guidage, qui comporte une section de support supérieure (551) et une section de support inférieure (552) décalée vers le bas par rapport à celle-ci, comportant respectivement des surfaces de support horizontales, la section de support supérieure (551) étant délimitée avec une section de guidage arrière verticale vers le fond supérieur et la section de support inférieure (552) étant délimitée par une section de guidage arrière verticale émergeant vers le haut, qui se rattache à la face avant de la section de support supérieure (551).
